# EUROPÄISCHE PATENTSCHRIFT

(11) **EP 3 744 618 B1**
(45) Veröffentlichungstag und Bekanntmachung des Hinweises auf die Patenterteilung: **31.08.2022**
(21) Anmeldenummer: 19177062.7
(22) Anmeldetag: 28.05.2019
(51) Int. Cl.: B62D 21/02

(54) **NUTZFAHRZEUG-CHASSIS**
COMMERCIAL VEHICLE CHASSIS
CHÂSSIS DE VÉHICULE UTILITAIRE

(43) Veröffentlichungstag der Anmeldung: 02.12.2020
(73) Patentinhaber: Schmitz Cargobull AG, 48341 Altenberge (DE)
(72) Erfinder: Rathmann, Norbert, 48356 Nordwalde (DE); Brinkert, David, 48493 Wettringen (DE); Zimmermann, Stefan, 48565 Steinfurt (DE)
(74) Vertreter: Cohausz & Florack

(56) Entgegenhaltungen:
- DE-B3-102006 027 722
- FR-A1- 2 914 242
- US-A- 4 534 589

## Beschreibung

Die Erfindung betrifft ein Nutzfahrzeug-Chassis. Hierbei handelt es sich um die Tragkonstruktion, an der einerseits mindestens eine Achse des Nutzfahrzeugs gelagert ist und das andererseits den Ladeboden trägt, auf dem im Gebrauch das von dem Nutzfahrzeug zu transportierende Gut abgesetzt wird. Um dem Chassis die notwendige Tragfähigkeit und Formsteifigkeit zu verleihen, umfasst ein Chassis der hier in Rede stehenden Art mindestens einen Längsträger und mindestens einen Hilfslangträger, die sich jeweils in Längsrichtung des Nutzfahrzeugs erstrecken, sowie mindestens einen quer zur Längsrichtung des Nutzfahrzeugs ausgerichteten Querträger, die mit dem Längsträger fest verbunden sind und an denen der Hilfslangträger abgestützt ist.

Im Nutzfahrzeugbau wird die Grundstruktur des Fahrzeugchassis in der Regel aus einfach geformten Längs- und Querträgern gebildet. Die Trägerprofile stützen dabei einerseits die Aufbauten und die Ladefläche ab, auf der im praktischen Einsatz das zu transportierende Gut steht. Anderseits dienen sie zum Befestigen von Anbauteilen. Bei diesen kann es sich beispielsweise um Fahrwerksteile, wie die Achse, die Radaufhängung, die Federung, Teile der Druckluftversorgung für die Bremseinrichtung, um Einrichtungen zum Bewegen, insbesondere Kippen, der Ladefläche oder um Staukästen und Einrichtungen handeln kann, die zum Aufbewahren von für den Betrieb des Fahrzeugs benötigten Hilfsmitteln dienen.

Für Auflieger für Sattelzüge oder konventionelle Anhänger für Lastkraftfahrzeuge kommen üblicherweise Längsträger zum Einsatz, die sich über die Länge des jeweiligen Aufliegers oder Anhängers erstrecken. Beispiele für Längsträger dieser Art sind in der DE 92 15 300 U1 und der DE 197 20 109 A1 beschrieben.

Neben dem voranstehend erläuterten Stand der Technik ist aus der DE 10 2006 027 722 B3 ein Hauptlangträger-Segment für ein Anhänger-Fahrgestell bekannt, das zur Anbringung der Fahrzeugachsen bestimmt ist und das mit wenigstens einem weiteren Hauptlangträger-Segment verbunden ist. Das Hauptlangträger-Segment besteht dabei aus einem abgewinkelten Stahloder Aluminiumprofil, das aus Blech gebogen ist und einen Doppel-L-Winkel beschreibt, so dass sich eine Profil-Konfiguration ergibt, die aus einem Vertikalsteg und einem Ober- und Untergurt zusammengesetzt ist.

Ein weiteres Nutzfahrzeug-Chassis ist aus der FR 2 914 242 A1 bekannt. Das Chassis weist zwei parallel ausgerichtete Längsträger auf, die durch Querträger zueinander beabstandet gehalten sind. An dem so gebildeten Chassis sind die Achsen des Nutzfahrzeugs gelagert. Auf den Längsträgern liegt ein aus Längsstreben und Querstreben zusammengesetzter, leiterförmiger Hilfsrahmen, der den Boden des Nutzfahrzeugs trägt, auf dem im Gebrauch das zu transportierende Gut gesetzt wird. Die Längsstreben und die Querstreben des Hilfsrahmens sind als Blechprofile geformt, wobei die Längsstreben auf den Längsträgern des Chassis aufliegen und die Querstreben den zwischen den Längsträgern vorhandenen Raum überspannen.

Des Weiteren ist aus der DE 10 2006 027 722 B3 ein Hauptlangträger-Segment für ein Anhänger-Fahrgestell bekannt, das zur Anbringung der Fahrzeugachsen bestimmt ist und das mit wenigstens einem weiteren Hauptlangträger-Segment verbunden ist. Das Hauptlangträger-Segment ist aus Blech zu einem abgewinkelten Stahl- oder Aluminiumprofil geformt, das einen Doppel-L-Winkel beschreibt. Das so gebildete Fahrgestell weist keinen Hilfslangträger auf, der auf einem Querträger abgestützt ist.

Aus der US 4,534,589 A ist ein Anhänger bekannt, dessen Bodenkonstruktion aus einem Paar von horizontal beabstandeten, sich in Längsrichtung erstreckenden Trägern und einer Vielzahl von in Längsrichtung beabstandeten, sich quer erstreckenden Querrahmenelementen besteht. Diese sind in in Längsrichtung beabstandeten Öffnungen in den oberen Bereichen der Träger angeordnet. Auf den Oberseiten der Querrahmenteile ist ein Boden angeordnet und mit diesen verschweißt. Die Querrahmenteile sind im Querschnitt U-förmig und bilden mit dem Boden geschlossene Formen.

Die über die Breite des Aufliegers oder Anhängers für Nutzfahrzeuge auftretenden Lasten werden in der Regel durch Querträgerprofile aufgenommen, die quer zur Längsrichtung des Aufliegers oder Anhängers ausgerichtet sind. Die Querträger können sich dabei über den Zwischenraum erstrecken, der zwischen den in der Regel parallel zueinander verlaufenden Längsträgern des Chassis vorhanden ist, und mit ihren Enden an dem jeweils zugeordneten Längsträger befestigt sein.

Es ist aber auch bekannt, in die Längsträger Öffnungen einzuformen, durch die bei der Montage des Chassis die Querträger geschoben werden, so dass sie mit ihren seitlichen Endabschnitten jeweils über die vom Zwischenraum zwischen den Längsträgern abgewandte Längsseite der Längsträger hinausstehen, während auf ihrem dann zwischen den Längsträgern angeordneten Tragabschnitt die Hilfslangträger ruhen.

Die Form und Stärke der im Fahrzeugbau eingesetzten Profilträger wird üblicherweise in Abhängigkeit von den auf ihnen lastenden Lasten sowie unter Berücksichtigung der geometrischen Gegebenheiten ausgelegt. Dabei besteht einerseits die Forderung nach einem minimalen Gewicht. Anderseits muss eine ausreichende Belastbarkeit auch unter ungünstigen Betriebsbedingungen gewährleistet sein.

Bei einem aus der Praxis bekannten Chassis liegen im von zwei Längsträgern seitlich begrenzten und von den Querträgern überbrückten Raum zwei sich über die Länge des Chassis erstreckende Hilfslangträger auf den Querträgern, um den von dem Chassis getragenen Ladeboden des Nutzfahrzeugs auch in diesem Bereich ausreichend abzustützen. Bei den Hilfslangträgern handelt es sich um massive Stahlprofile, die fest mit den sie tragenden Querträgern verbunden sind.

Ausgehend von dem voranstehend erläuterten Stand der Technik hat sich die Aufgabe gestellt, ein Chassis zu entwickeln, das bei minimiertem Gewicht und Materialeinsatz eine optimale Tragfähigkeit besitzt.

Die Erfindung hat diese Aufgabe dadurch gelöst, dass ein Nutzfahrzeug mit einem Chassis mindestens die in Anspruch 1 angegebenen Merkmale besitzt.

Vorteilhafte Ausgestaltungen der Erfindung sind in den abhängigen Ansprüchen angegeben und werden wie der allgemeine Erfindungsgedanke nachfolgend im Einzelnen erläutert.

In Übereinstimmung mit dem eingangs erläuterten Stand der Technik ist bei einem erfindungsgemäßen Nutzfahrzeug-Chassis somit mindestens eine Achse des Nutzfahrzeugs gelagert, wobei das erfindungsgemäße Nutzfahrzeug-Chassis mindestens einen Längsträger und mindestens einen Hilfslangträger, die sich jeweils in Längsrichtung des Nutzfahrzeugs erstrecken, sowie mindestens einen quer zur Längsrichtung des Nutzfahrzeugs ausgerichteten Querträger umfasst, die mit dem Längsträger fest verbunden sind und an denen der Hilfslangträger abgestützt ist.

Erfindungsgemäß ist nun an einem solchen Nutzfahrzeug-Chassis der Hilfslangträger als zum Querträger hin offenes Blechprofil geformt.

Die Formgebung des erfindungsgemäß den Hilfslangträger bildenden Blechprofils ist "offen". Hierunter wird vorliegend verstanden, dass das Profil einen an mindestens einer seiner Längsseiten zugänglichen Raum begrenzt, sein Querschnitt also keine geschlossene Form, wie ein Quadrat, einen Kreis, ein Rechteck oder desgleichen bildet, sondern ein L, ein U, ein C oder vergleichbare seitlich offene Gestaltungen aufweist. Derartige Profilformen weisen eine besonders hohe Formsteifigkeit auf und lassen sich besonders einfach durch Umformung eines einzigen Blechzuschnitts fertigen. Dadurch, dass bei einem erfindungsgemäßen Chassis als Hilfslangträger ein Blechprofil verwendet wird, das aus einem Blechmaterial gefertigt ist und aufgrund dessen und seiner offenen, zu mindestens einer der Längsseiten des Blechprofils geöffneten Formgebung ein gegenüber konventionellen, massiv geformten Hilfslangträger deutlich reduziertes Gewicht aufweist, ist ein erfindungsgemäßes Chassis deutlich leichter als ein Chassis, bei dem massiv gefertigte, als Strangprofil oder als Schweißkonstruktion gefertigte Langträger zum Einsatz kommen. Überraschend hat sich dabei gezeigt, dass die erfindungsgemäß vorgesehenen Hilfslangträger trotz ihrer leichten Bauart hohen Belastungen standhalten.

Bei einem derart ausgestalteten erfindungsgemäßen Nutzfahrzeug-Chassis ist also der mindestens eine Hilfslangträger nicht mehr als massives Stahlprofilbauteil ausgelegt, sondern als Blechprofil, das aus einem Blechzuschnitt geformt ist. Als "Blechzuschnitte" werden hier sowohl Spaltbänder, die von einem breiteren Band abgeteilt sind und in einem kontinuierlich durchgeführten Umformverfahren, wie beispielsweise dem Rollprofilieren oder desgleichen verarbeitet wurden, als auch Bleche bezeichnet, die beispielsweise von einem größeren Blechmaterial oder einem Band abgeteilt sind, um zu dem Blechprofil geformt zu werden. Abgesehen von der beträchtlichen Gewichtsersparnis die schon dadurch erzielt wird, dass der Hilfslangträger durch Umformen eines dünnen Blechs erzeugt wird, führt die Verwendung eines Blechprofils auch aus fertigungstechnischer Sicht zu einer erheblichen Vereinfachung. So lassen sich derartige dünnwandige Blechprofile problemlos im Serienbetrieb beispielsweise durch Rollieren, auch "Rollformen" oder "Rollprofilieren" genannt, oder vergleichbare Umform-Fertigungsverfahren in die jeweils gewünschte Form bringen. Hierzu geeignete Blechstärken liegen typischerweise bei 1 - 6 mm, insbesondere bei 1 - 5 mm, wobei Blechdicken von mindestens 1,5 mm besonders praxisgerecht sind.

Gemäß einer für die Praxis besonders relevanten Ausführung der Erfindung ist der Hilfslangträger auf dem Querträger mittels eines in das Blechprofil greifenden Stützelements in einer Position gehalten, in der zwischen dem Hilfslangträger und dem Querträger ein freier Abstand besteht. Durch diese beabstandete Anordnung des Hilfslangträgers kann das Lastaufnahmevermögen eines erfindungsgemäßen Chassis auf besonders einfache und gleichzeitig effektive Weise weiter erhöht werden.

So hat es sich überraschend herausgestellt, dass es dadurch, dass der Hilfslangträger erfindungsgemäß nicht unmittelbar, d.h. in direktem Kontakt, an dem jeweiligen Querträger abgestützt ist, sondern dass er durch Einsatz eines geeigneten Stützelements mit Abstand zu dem Querträger gehalten wird, möglich wird, besonders dünnes Blechmaterial für die Formgebung des mindestens einen Hilfslangträgers zu verwenden. Das Stützelement greift dazu erfindungsgemäß in den offenen Hilfslangträger hinein, so dass die Abstützung des Hilfslangträgers in einem Bereich stattfindet, der entfernt ist von der Oberseite des Querträgers mit der Folge, dass zwischen dem Hilfslangträger und dem Querträger der angestrebte freie Abstand besteht.

Da somit kein direkter oder indirekter Kontakt zwischen den freien Endkanten des Hilfslangträgers und dem Querträger besteht, wird durch die erfindungsgemäß beabstandete Anordnung des Hilfslangträgers erreicht, dass der Hilfslangträger der Biegeverformung, die sich im praktischen Einsatz in Folge der in Schwerkraftrichtungen auf den Hilfslangträger wirkenden Lasten einstellt, frei folgen kann. Ein erfindungsgemäß abgestützter Hilfslangträger ist daher in seinen seitlich entlang des Stützelements geführten Abschnitten, also bei einem im Querschnitt L- oder U-förmigen Hilfslangträger typischerweise den Schenkelabschnitt, nicht den hohen Reaktionskräften ausgesetzt, die im jeweiligen Auflagebereich auftreten würden, wenn der Hilfslangträger mit den betreffenden Schenkelabschnitten direkt auf dem Hilfslangträger abgestützt wäre. Durch die erfindungsgemäße Gestaltung eines Nutzfahrzeug-Chassis lassen sich somit die gegen eine Durchbiegung des Hilfslangträgers gerichteten hohen Druckkräfte vermeiden, die bei einem aus dünnen Blech geformten Hilfslangträger zu einer plastischen Verformung des jeweiligen Schenkelabschnitts und damit einhergehend zu einer bleibenden Beschädigung des Hilfslangträgers führen würden.

Grundsätzlich kann der Hilfslangträger jede beliebige, im Sinne der Erfindung offene Form aufweisen, die sich durch Umformen eines Blechzuschnitts herstellen lässt. Eine für die praktische Ausführung der Erfindung besonders vorteilhafte Ausgestaltung sieht vor, dass der Hilfslangträger einen sich über die Länge des Hilfslangträgers erstreckenden Basisabschnitt aufweisen und an mindestens einer Längsseite des Basisabschnitts ein in Richtung des Querträgers weisender Schenkelabschnitt angeschlossen sein kann, zwischen dessen dem Querträger zugeordneter Endkante und der Oberseite des Querträgers der freie Abstand besteht.

Der Querschnitt solcher Blechprofile bildet typischerweise ein "L", wobei der Basisabschnitt in der Praxis parallel zur Oberseite des zugeordneten Querträgers ausgerichtet ist und der daran beispielsweise unter einem rechten Winkel angeschlossene Schenkelabschnitt ausgehend von der zugeordneten Längsseite des Basisabschnitts in Richtung des Querträgers weist. Das optional gegen den Basisabschnitt wirkende und damit in den von dem Basisabschnitt und dem Schenkelabschnitt des Hilfslangträgers begrenzten Raum greifende Stützelement hält dann den Hilfslangträger bezogen auf den Querträger in einer Höhenposition, in der der Schenkelabschnitt mit seinem freien Rand in dem erfindungsgemäß vorgesehenen Abstand oberhalb der Oberseite des Querträgers endet.

Eine besonders formstabile Ausführung dieser Ausgestaltung eines erfindungsgemäß eingesetzten, aus Blechmaterial geformten Hilfslangträgers ergibt sich hier, wenn der Hilfslangträger nach Art eines U-Profils geformt ist, bei dem an jede Längsseite des Basisabschnitts jeweils ein Schenkelabschnitt angeschlossen ist, zwischen dessen dem Querträger zugewandten Endkante und der Oberseite des Querträgers jeweils der freie Abstand besteht.

Eine einfache Abstützung des als U-Blechprofil gestalteten Hilfslangträgers lässt sich dabei dadurch erreichen, dass der Hilfslangträger mit seinen Schenkelbabschnitten in Richtung des jeweiligen Querträgers weisend auf den betreffenden Querträger gesetzt wird. In diesem Fall ist der Hilfslangträger in Richtung des Querträgers offen, so dass das optional vorgesehene und auf dem jeweiligen Querträger stehende Stützelement in den von den Schenkelabschnitten an seinen Längsseiten und von dem Basisabschnitt an seiner Oberseite begrenzten Raum greifen kann.

Um ihre Formsteifigkeit zusätzlich zu erhöhen, kann der Schenkelabschnitt eines erfindungsgemäßen Hilfslangträgers im Bereich seines freien Endes einen nach außen weisenden, parallel zu seinem Basisabschnitt ausgerichteten, Krempenabschnitt aufweisen. Im Fall, dass der Hilfslangträger im Querschnitt "U"-förmig mit zwei Schenkelabschnitten ist, an denen jeweils ein nach außen weisender Krempenabschnitt vorgesehen ist, spricht man auch von einem "hut-förmigen" Blechprofil. Die verstärkende Wirkung des jeweiligen Krempenabschnitts kann dabei dadurch optimiert werden, dass er mindestens doppellagig gefalzt wird.

Bei einer optionalen Abstützung des Hilfslangträgers über ein Stützelement ist vorzugsweise ausschließlich der Basisabschnitt auf dem optional vorgesehenen Stützelement abgestützt, während im Bereich des jeweiligen Schenkelabschnitts jegliche Abstützung, an der es zu Reaktionskräften in Folge der im Gebrauch eintretenden Biegeverformung kommen könnte, möglichst vollständig vermieden wird.

Bei einer optionalen Abstützung des Hilfslangträgers über ein Stützelement reicht es grundsätzlich für die erfindungsgemäßen Zwecke aus, wenn der Hilfslangträger lose auf dem optional vorgesehenen Stützelement aufliegt. Dies gilt insbesondere dann, wenn der Hilfslangträger an seinen Enden fest mit einem anderen Bauteil des Chassis verkoppelt ist, seine Position in Längs- und Querrichtung des Chassis also auf diese Weise festgelegt ist.

Überraschend hat sich gezeigt, dass es für die erfindungsgemäßen Zwecke ausreicht, wenn das optional vorgesehene Stützelement aus einem Kunststoff, einem Holzwerkstoff oder einem sonstigen Werkstoff geformt ist, der ausreichend inkompressibel und formsteif ist, um die in der Praxis auf ihn wirkenden Belastungen aufzunehmen und unter allen Umständen zu verhindern, dass der Hilfslangträger auf dem Querträger aufsetzt.

Der erfindungsgemäß zwischen dem Hilfslangträger und dem zugeordneten Querträger vorgesehene lichte Abstand sollte unter Berücksichtigung der Materialeigenschaften des Blechmaterials des Hilfslangträgers, von dessen Gestaltung und der daraus resultierenden zu erwartenden Durchbiegung so gewählt werden, dass auch unter Berücksichtigung von unvermeidbaren Fertigungstoleranzen bei allen denkbaren Belastungssituationen ausgeschlossen ist, dass der Hilfslangträger in direkten Kontakt mit dem Querträger kommt, wie es beispielsweise der Fall wäre, wenn der Hilfslangträger auf dem Querträger aufsetzen würde. Typischerweise liegen hierzu in der Praxis die erfindungsgemäß vorgesehenen Abstände zwischen dem Hilfslangträger und dem jeweiligen Querträger im Bereich von 1 - 5 mm, insbesondere 1 - 3 mm .

Bei Einsatz mindestens eines erfindungsgemäß vorgesehenen Hilfslangträgers kann die Anzahl der Querträger, die im Gebrauch zum Abstützen des auf dem Chassis transportierten Guts benötigt werden, gegenüber Konstruktionen, bei denen beispielsweise der Ladeboden des Nutzfahrzeugs ausschließlich auf Querträgern aufliegt, die von Längsträgern des Chassis getragen werden, deutlich reduziert werden. Da sie aus vergleichbar dünnen Blechzuschnitten gefertigt sind, weisen erfindungsgemäß eingesetzte Hilfslangträger, gleichzeitig ein gegenüber aus massivem Stahl als Profil warmgeformten oder als Schweißkonstruktion aus dicken Stahlblechen hergestellten Hilfslangträgern deutlich vermindertes Eigengewicht auf. Dies und die Minimierung der benötigten Anzahl an Querträgern führen zu einem deutlich reduzierten Gesamtgewicht bei gleichzeitig vereinfachter und kostengünstiger Herstellung.

Dieser Effekt zeigt sich insbesondere im Fall, dass die Oberseite des Hilfslangträgers und die Oberseite des Längsträgers in einer gemeinsamen Ebene liegen und auf den Oberseiten von Hilfslangträger und Längsträger ein Ladeboden mit ihrer Unterseite aufliegt, an deren Oberseite eine Ladefläche für ein zu transportierendes Gut vorgesehen ist. Bei einer solchen für die Praxis besonders wichtigen Ausgestaltung der Erfindung ergibt sich in Folge der erfindungsgemäßen Gestaltung der Hilfslangträger als Blechprofile und ihrer erfindungsgemäßen Abstützung auf dem jeweiligen Querträger nicht nur ein Nutzfahrzeug-Chassis mit gegenüber konventionellen Chassis vermindertem Gewicht, sondern gleichzeitig auch optimaler großflächiger Abstützung des Ladebodens, auf dem im Gebrauch auch schweres Transportgut für den Transport sicher verstaut werden kann.

Gleichzeitig lässt sich bei einem erfindungsgemäßen Chassis die Abstützung des Ladebodens problemlos so aufteilen, dass Ladebodenbereiche, die beim Be- und Entladen beispielsweise von einem Gabelstapler oder anderen Hilfsmitteln befahren werden, für jeden Belastungsfall ausreichend unterstützt sind. Hierzu können beispielsweise in dem betreffenden Bereich zusätzliche erfindungsgemäß als Blechprofile gestaltete und in erfindungsgemäßer Weise abgestützte Hilfslangträger vorgesehen sein, die in Querrichtung des Nutzfahrzeugs gesehen enger benachbart angeordnet sind oder einen anderen Verlauf aufweisen als in den Bereichen, in denen weniger hohe Belastungen auftreten.

Grundsätzlich ist es denkbar, ein Nutzfahrzeug-Chassis der hier in Rede stehenden Art aufbauend auf einen einzigen, beispielsweise zentral angeordneten Längsträger zu bilden, bei dem ein, zwei oder noch mehr Hilfslangträger, beispielsweise in bezogen auf den Längsträger symmetrischer Anordnung, seitlich von dem Längsträger vorgesehen sind, um ein Transportgut über seine gesamte Breite abzustützen. Hierzu kann ein Ladeboden auf dem Längsträger und den Hilfslangträgern abgestützt sein, auf dem das Transportgut steht.

Eine für die Praxis besonders relevante Ausgestaltung eines erfindungsgemäßen Nutzfahrzeug-Chassis zeichnet sich dadurch aus, dass es in an sich dem Standard entsprechender Weise mindestens zwei Längsträger umfasst, die durch den jeweils mindestens einen, vorzugsweise zwei oder mehr Querträger in einem Abstand gehalten sind, wobei mindestens ein erfindungsgemäß als Blechprofil ausgebildeter Hilfslangträger in dem von den Längsträgern an seinen Längsseiten begrenzten Zwischenraum angeordnet und in der erfindungsgemäßen Weise auf dem jeweils mindestens einen Querträger abgestützt ist. Um auch seitlich außen von den Längsträgern eine Abstützung des jeweiligen Transportguts oder eines von dem Chassis getragenen Ladebodens zu ermöglichen, kann sich der wenigstens eine Querträger in an sich bekannter Weise von einem zentralen Abschnitt, der zwischen den Längsträgern angeordnet ist, durch einen in den Längsträger eingeformten fensterartigen Ausschnitt bis zu einem Seitenabschnitt des Querträgers erstrecken, der seitlich nach außen über jeweils einen der Längsträger hinaussteht. Ein optimal flach bauendes erfindungsgemäßes Chassis, das nur einen Bauraum von minimaler Höhe benötigt, lässt sich dabei dadurch erreichen, dass in Gebrauchsstellung der zentrale Abschnitt des Querträgers gegenüber dem Seitenabschnitt des Querträgers abgesenkt ist, so dass zwischen der Oberseite des zentralen Abschnitts und einer gedachten, durch die Oberseite der Längsträger aufgespannten Ebene ein Freiraum vorhanden ist, in dem der mindestens eine Hilfslangträger angeordnet ist. Dabei erweist es sich im Hinblick auf die einfache Abstützung von Transportgut oder von einem auf dem Chassis liegenden Ladeboden als besonders günstig, wenn die Oberseite des Hilfslangträgers in der gedachten, durch die Oberseite der Längsträger aufgespannten Ebene liegt.

Nachfolgend wird die Erfindung anhand einer ein Ausführungsbeispiel darstellenden Zeichnung näher erläutert. Es zeigen jeweils schematisch:
- Fig. 1: ein Nutzfahrzeug in seitlicher Ansicht;
- Fig. 2: einen Ausschnitt des Chassis des Nutzfahrzeugs gemäß Fig. 1 in einer perspektivischen Ansicht;
- Fig. 3: das Chassis gemäß Fig. 2 in einem Schnitt entlang der in Fig. 2 eingezeichneten Schnittlinie X-X.

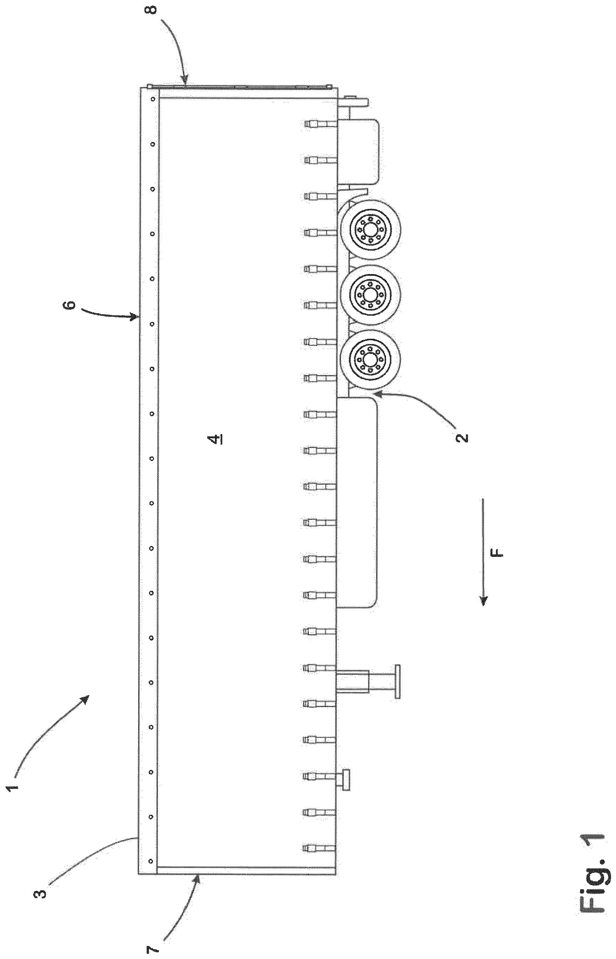

Bei dem in Fig. 1 dargestellten Nutzfahrzeug 1 handelt es sich um einen Auflieger für einen hier nicht weiter dargestellten Sattelzug. Auflieger dieser Art werden in der Fachsprache auch als "Trailer" bezeichnet und werden im Gebrauch von einer hier nicht gezeigten Zugmaschine des Sattelzugs gezogen.

Das Nutzfahrzeug 1 umfasst ein Chassis 2, das einen so genannten Planen-Aufbau 3 trägt und an dem die Achsen mit den Rädern des Nutzfahrzeugs 1 gehalten sind.

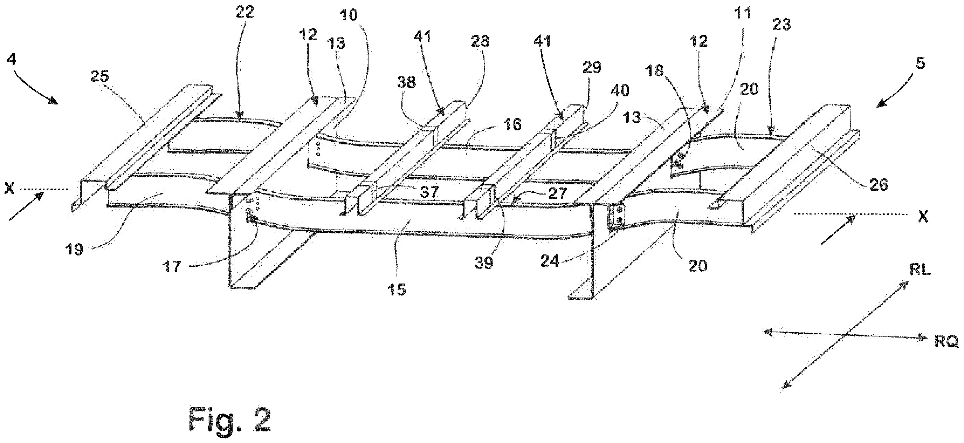

Bei dem Aufbau 3 sind die Längsseitenwände 4,5, von denen in der in Fig. 1 dargestellten Ansicht nur die in Vorwärtsfahrtrichtung F linke Längsseitenwand 4 sichtbar ist und die in Fig. 2 nur durch Pfeile angedeutet sind, und das Dach 6 jeweils durch eine Plane gebildet, wogegen die Stirnwand 7 und die Rückwand 8 des Aufbaus 3 in an sich bekannter Weise als formsteife Flächenelemente ausgebildet sind. Dabei ist in der Rückwand 8 üblicherweise eine Türanlage vorgesehen, über die die Beladung des von dem Aufbau 3 umgrenzten und gegenüber der Umgebung abgeschirmten Laderaums des Nutzfahrzeugs von dessen Rückseite her erfolgen kann.

Um eine Beladung des Laderaums von dem. Aufbau 3 des Nutzfahrzeugs umgrenzenden Laderaums R von den Längsseiten oder von der Dachseite her zu ermöglichen, können die die Längsseitenwände 4,5 und das Dach 6 bildenden Planen in an sich bekannter Weise zwischen einer geschlossenen, in Fig. 1 dargestellten Stellung, in eine geöffnete Stellung verschoben werden, in der sie nahe der Stirnwand 7 in regelmäßige Falten gelegt sind.

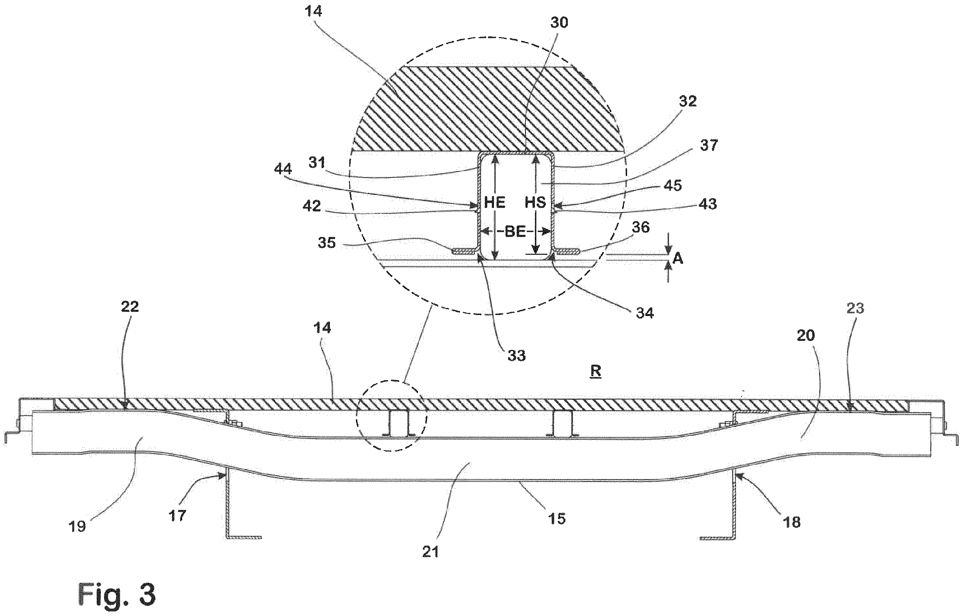

Wie aus Fig. 2 und 3 ersichtlich, umfasst das Chassis 2 des Nutzfahrzeugs 1 zwei Längsträger 10,11, die sich in Längsrichtung RL des Nutzfahrzeugs 1 erstrecken und dabei parallel zueinander ausgerichtet sind. Die Längsträger 10,11 sind beispielsweise durch Rollformen aus einem 4 - 8 mm, insbesondere 5 - 6 mm dicken und mit einer metallischen Korrosionsschutzbeschichtung, wie einer Beschichtung auf Zink- oder Aluminiumbasis, versehenen Stahlblechzuschnitt erzeugt worden. Als Stahlblechzuschnitt für das Rollformen der Längsträger 10,11 ist hierzu marktübliches Spaltband verwendet worden, das für diese Zwecke bereits im Einsatz ist.

Die Längsträger 10, 11 weisen in an sich ebenfalls bekannter Weise jeweils einen S-förmigen Querschnitt auf, bei dem an das obere Ende eines im Gebrauch vertikal ausgerichteten Stegabschnitts ein in horizontaler Ausrichtung seitlich von dem jeweils anderen Längsträger 11,10 weggerichteter oberer Gurtabschnitt angeformt ist, während an das im Gebrauch untere Ende des Stegabschnitts ein unterer Gurtabschnitt angeformt ist, der in horizontaler Ausrichtung in Richtung des jeweils anderen Längsträgers 11,10 weist. Der obere Gurtabschnitt der Längsträger 10,11 hat an seiner Oberseite 12 eine Auflagefläche, auf der ein in konventioneller Weise aus Holzpaneelen gebildeter Ladeboden 14 liegt. Die ebene Unterseite des Ladebodens 14 liegt dementsprechend in einer gedachten Ebene, die durch die Oberseiten 12 der Längsträger 10,11 aufgespannt ist. Unterstützt werden kann die Tragfähigkeit der Längsträger 10,11 durch jeweils ein L-förmiges Winkelprofilstück 13, das mit seinem einen Schenkel an der dem Zwischenraum zwischen den Längsträgern 10,11 zugewandten Seite des Stegs der Längsträger 10,11 befestigt wird, während die freie Oberseite des anderen Schenkels des Winkelprofilstücks 13 bündig zur Auflagefläche 12 der Längsträger 10,11 ausgerichtet wird. Der Ladeboden 14 kann in ebenfalls an sich bekannter Weise mit der Oberseite 12 der Längsträger 10,11 verklebt oder verschraubt sein.

Der Abstand der Längsträger 10,11 voneinander ist durch mehrere, beispielsweise sieben Querträger bestimmt, von denen in Fig. 2 nur die zwei Querträger 15,16 gezeigt sind. Die Querträger 15,16 sind in einer quer zur Längserstreckung RL ausgerichteten Querrichtung RQ des Nutzfahrzeugs 1 angeordnet.

Dabei können die Querträger 15,16 beispielsweise in gleichmäßigen Abständen über die Länge der Längsträger 10,11 angeordnet sein.

Die Querträger 15,16 können aber in Fahrzeug-Längsrichtung RL auch in unterschiedlichen Abständen positioniert sein. So kann es beispielsweise zweckmäßig sein, zwischen zwei benachbarten Querträgern 15,16 einen geringeren Abstand vorzusehen, als zwischen einem anderen Paar von benachbarten Querträgern, wenn auf den von den Querträgern 15,16 unmittelbar getragenen Flächenabschnitt des Ladebodens 14 im Gebrauch besonders hohe Lasten wirken. Ein größerer Abstand von benachbarten Querträgern 15,16 kann beispielsweise in weniger stark belasteten Bereichen sinnvoll sein, um Freiraum für die Positionierung eines an dem Chassis 2 des Nutzfahrzeugs 1 zu befestigenden Aggregats zu schaffen, wie beispielsweise für die Positionierung einer Achse, an der Räder des Fahrzeugs gelagert sind, Einrichtungen, die zum Betrieb des Nutzfahrzeugs 1 benötigt werden, oder Staukästen und desgleichen. Dadurch, dass durch den größeren Abstand der Querträger 15,16 Raum geschaffen ist, in dem die betreffenden Aggregate angeordnet sind, kann die Höhe des Chassis 2 über dem Untergrund, auf dem das Nutzfahrzeug 1 im Gebrauch bewegt wird, minimiert und folglich die im Rahmen der gesetzlichen Vorgaben mögliche Bauhöhe des Nutzfahrzeugs 1 optimal für eine Maximierung der nutzbaren Höhe des Laderaums R genutzt werden.

Die aus hierzu im Stand der Technik bewährten Stahlmaterial bestehenden ebenfalls mit einer Korrosionsschutzbeschichtung versehenen Querträger 15,16 sind in einem Stück beispielsweise durch Warmumformen des jeweiligen Stahlwerkstoffs oder als Schweißkonstruktion aus Blechzuschnitten hergestellt.

Die Querträger 15,16 sind dazu jeweils durch in die Längsträger 10,11 eingeformte fensterartige Ausschnitte 17,18 geschoben worden, die gegenüberliegend zueinander in die Stege der Längsträger 10,11 eingeformt worden sind. Im fertig montierten Zustand stehen die Querträger 15,16 mit jeweils einem Seitenabschnitt 19,20 seitlich nach außen gerichtet über die Längsträger 10,11 hinaus, während der Abstand zwischen den Längsträgern 10,11 von einem zentralen Abschnitt 21 der Querträger 15,16 überbrückt wird. Die Oberseite 22,23 der Seitenabschnitte 19,20 der Querträger 15,16 liegt auf dem Niveau der an der Oberseite 12 der Längsträger 10,11 vorhandenen Auflagefläche. Der Ladeboden 14 ist auf diese Weise in seinen seitlich nach außen über die Längsträger 10,11 hinausstehenden Bereichen durch die Seitenabschnitte 19,20 der Querträger 15,16 abgestützt.

Mittels Winkelstücken 24 sind die Querträger 15,16 an den Längsträgern 10,11 fixiert. Die Winkelstücke 24 sind dazu mit ihrem einen Schenkel mit dem Steg des jeweils zugeordneten Längsträgers 10,11 und mit ihrem anderen Schenkel mit dem jeweiligen Querträger 15,16 verschraubt.

An ihren freien Enden tragen die Querträger 15,16 jeweils ein Rahmenprofil 25,26. Die Rahmenprofile 25,26 bilden den seitlichen Abschluss des Chassis 2 und damit einhergehend des Ladebodens 14 entlang der Längswände 4,5 des Nutzfahrzeugs 1 und können in bekannter Weise mit Funktionselementen, wie Anschlägen für Zurrmittel zum Sichern des Transportguts, Anschlägen für das Verspannen der die Längsseitenwände 4,5 bildenden Planen, Gelenken für Ladebordwände und desgleichen, versehen sein.

Der zentrale Abschnitt 21 der Querträger 15,16 ist dagegen gegenüber den Seitenabschnitten 19,20 der Querträger 15,16 abgesenkt, so dass zwischen der Unterseite des Ladebodens 14 und der Oberseite 27 des zentralen Abschnitts 21 der Querträger 15,16 ein Freiraum vorhanden ist. Die Profilhöhe der Seitenabschnitte 19,20 der beispielsweise als T-Profil geformten Querträger 15,16 nimmt in Richtung ihrer freien Enden ab, wobei die größte Profilhöhe im zentralen Abschnitt 21 vorliegt. Der Übergang zwischen dem zentralen Abschnitt 21 und den Seitenabschnitten 19,20 der Querträger 15,16 ist dabei sprungfrei nach Art einer doppelten Abkröpfung ausgeführt, wobei der Umkehrpunkt des kontinuierlichen Kurvenzugs, der durch diese jeweils zwischen dem zentralen Abschnitt 21 und dem jeweiligen Seitenabschnitt 19,20 angeordneten Abkröpfung beschrieben wird, im Bereich des jeweils zugeordneten fensterartigen Ausschnitts 17,18 angeordnet ist.

In dem Freiraum zwischen dem Ladeboden 14 und dem zentralen Abschnitt 21 der Querträger 15,16 liegen zwei Hilfslangträger 28,29, die sich in Längsrichtung RL parallel zu den Längsträgern 10,11 erstrecken und in gleichmäßigen Abständen in Querrichtung RQ verteilt zwischen den Längsträgern 10,11 angeordnet sind.

Bei den Hilfslangträgern 28,29 handelt es sich um in einem Stück hergestellte Blechprofile, die durch Rollprofilieren von als Spaltband mit einer Dicke von typischerweise 2 - 6 mm, insbesondere 3 - 4 mm, bereitgestellten Blechzuschnitten geformt worden sind. Sie weisen eine im Querschnitt ein "U" bildende, in Richtung der Querträger 15,16 offene Form auf, die in der Fachsprache auch als "hutförmig" bezeichnet wird. So besitzen die Hilfslangträger 28,29 einen parallel zur Oberseite 27 der Querträger 15,16 ausgerichteten Basisabschnitt 30, an dessen Längskanten jeweils ein Schenkelabschnitt 31,32 angeschlossen ist, der in Richtung der Querträger 15,16 weist und winklig, insbesondere rechtwinklig in Bezug auf den Basisabschnitt 30 ausgerichtet ist. Dabei umfassen die Schenkelabschnitte 31,32 jeweils einen nach außen weisenden, parallel zum Basisabschnitt 30 ausgerichteten, doppellagig gefalzten Krempenabschnitt 35,36, der an ihre unteren freien Endkanten 33,34 angeformt ist und den Schenkelabschnitten 31,32 zusätzliche Formsteifigkeit verleiht.

Auf den Querträgern 15,16 sind die Hilfslangträger 28,29 über quaderförmige Stützelemente 37,38,39,40 abgestützt, die aus einem inkompressiblen, hoch druckbelastbaren Kunststoffwerkstoff gefertigt sind. Hierzu liegen die Hilfslangträger 28,29 mit ihrem Basisabschnitt 30 auf den jeweils zugeordneten Stützelementen 37,38;39,40 auf.

Die Höhe HE der Stützelemente 37 - 40 ist dabei so bemessen, dass die Oberseite 41 der Hilfslangträger 28,29 auf demselben Niveau liegt wie die Oberseiten 12 der Längsträger 10,11, so dass der Ladeboden 14 mit seiner Unterseite auch auf den Hilfslangträgern 28,29 abgestützt ist und die Oberseite 41 der Hilfslangträger 28,29 folglich in der gedachten Ebene liegt, die durch die Oberseiten der Längsträger 10,11 aufgespannt ist. Um auch hier eine dauerhafte Anbindung zu gewährleisten, kann der Ladeboden 14 mit den Hilfslangträgern 28,29 ebenfalls verklebt sein.

Die Höhe HE der Stützelemente 37 - 40 ist um etwa 2 mm höher als die innere Höhe HS, über die sich die Schenkelabschnitte 31,32 und die daran angeformten Krempenabschnitte 35,36 der Hilfslangträger 28,29 erstrecken. Gleichzeitig entspricht die Breite BE der Stützelemente 37 - 40 der lichten Weite zwischen den Schenkelabschnitten 31,32 des jeweiligen Hilfslangträgers 28,29. Auf diese Weise sitzen die Hilfslangträger 28,29 in Querrichtung RQ im Wesentlichen spielfrei auf den zugeordneten Stützelementen 37,38;39,40 und schweben in einem Abstand A über der Oberseite 27 des zentralen Abschnitts 21 der Querträger 15,16. Das Maß des Abstands A ist bestimmt durch die Differenz der Höhe HE der Stützelemente 37 - 40 und der inneren Höhe HS, über die sich die Schenkelabschnitte 31,32 und die daran angeformten Krempenabschnitte 35,36 der Hilfslangträger 28,29 erstrecken, beträgt hier also etwa 2 mm. Ein derart im Bereich von 1 - 3 mm liegender Abstand A reicht erfahrungsgemäß aus, um unter Berücksichtigung von möglichen Fertigungstoleranzen zu gewährleisten, dass die Hilfslangträger 28,29 im Gebrauch zu keinem Zeitpunkt auf der Oberseite 27 der Querträger 15,16 aufsetzen. Durch die um den Abstand A beabstandete Anordnung der Hilfslangträger 28,29 über den Querträgern 15,16 ist somit gewährleistet, dass die Schenkelabschnitte 31,32 im Gebrauch frei von in Richtung des Ladebodens 14 gerichteten Druckbelastungen gehalten werden, durch die andernfalls im Fall, dass die mit diesen Reaktionskräften einhergehenden Druckspannungen in den Schenkelabschnitten eine bestimmte Grenze überschreiten, eine bleibende plastische Verformung durch Einknicken der Schenkelbabschnitte 31,32 verursachen könnten.

Statt einer direkten Abstützung der Hilfslangträger 28,29 auf den Querträgern 15,16 werden somit in den Bereichen, in denen sich die Hilfslangträger 28,29 und die Querträger 15,16 kreuzen, die im Gebrauch auf den Hilfslangträgern 28,29 in Schwerkraftrichtung lastenden Kräfte über die gegen den Basisabschnitt 30 der Hilfslangträger 28,29 wirkenden Stützelemente 37 - 40 in die Querträger 15,16 abgeleitet. Über die Abstände, die in Längsrichtung RL zwischen den Querträgern 15,16 zu überbrücken sind, stützen dagegen die Hilfslangträger 28,29 den Ladeboden 14 ab. Dabei gewährleisten die Schenkelabschnitte 31,32 trotz der geringen Blechdicke des Blechmaterials, aus dem die Hilfslangträger 28,29 bestehen, eine so hohe Biegesteifigkeit der Hilfslangträger 28,29, dass es auch bei hohen Belastungen zu keiner Durchbiegung des Ladebodens 14 kommt. Diese Formsteifigkeit bleibt dabei über die gesamte Gebrauchsdauer des Nutzfahrzeugs 1 erhalten, da eine Beeinträchtigung der aussteifenden Wirkung der Schenkelabschnitte 31,32 in Folge einer Überlastung und einer damit einhergehenden plastischen Verformung der Schenkelabschnitte 31,32 durch die erfindungsgemäß in einem Abstand A zu den Querträgern 15,16 beabstandete Anordnung der Hilfslangträger 28,29 sicher vermieden wird.

Der in Höhenrichtung H, also senkrecht zur ebenen Unterseite des Ladebodens 14, das heißt senkrecht zur durch die Oberseiten 12 der Längsträger 10,11 aufgespannten Ebene gemessene freie Abstand zwischen der Unterseite des Ladebodens 14 und der Oberseite 27 des zentralen Abschnitts 21 der Querträger 15,16 ergibt sich somit als aus der Höhe HE und der Blechdicke des Basisabschnitts 30 gebildete Summe oder, gleichwertig, als Summe gebildet aus dem Abstand A, der Höhe HS und der Blechdicke des Basisabschnitts 30.

### BEZUGSZEICHEN

- 1: Nutzfahrzeug (Sattelauflieger)
- 2: Chassis des Nutzfahrzeugs 1
- 3: Planen-Aufbau des Nutzfahrzeugs 1
- 4,5: Längsseitenwand des Planen-Aufbaus 3
- 6: Dach des Planen-Aufbaus 3
- 7: Stirnwand des Planen-Aufbaus 3
- 8: Rückwand des Planen-Aufbaus 3
- 10,11: Längsträger
- 12: Oberseite der Längsträger 10,11
- 13: Winkelprofilstück
- 14: Ladeboden
- 15,16: Querträger
- 17,18: fensterartige Ausschnitte in den Stegen der Längsträger 10,11
- 19,20: seitlich über die Längsträger 10,11 hinausstehende Seitenabschnitte der Querträger 15,16
- 21: zentraler Abschnitt der Querträger 15,16
- 22,23: Oberseite der Seitenabschnitte 19,20
- 24: Winkelstücke
- 25,26: äußere Rahmenprofile des Chassis 2
- 27: Oberseite des zentralen Abschnitts 21
- 28,29: Hilfslangträger
- 30: Basisabschnitt der Hilfslangträger 28,29
- 31,32: Schenkelabschnitte der Hilfslangträger 28,29
- 33,34: freie Endkanten der Schenkelabschnitte 31,32
- 35,36: Krempenabschnitte der Schenkelabschnitte 31,32
- 37 - 40: Stützelemente
- 41: Oberseite der Hilfslangträger 28,29
- A: Abstand zwischen den Hilfslangträgern 28,29 und der Oberseite 27 der Querträger 15,16
- BE: Breite der Stützelemente 37 - 40
- F: Vorwärtsfahrtrichtung
- H: Höhenrichtung
- HE: Höhe der Stützelemente 37 - 40
- HS: innere Höhe der Hilfslangträger 28,29
- R: vom Aufbau 3 umgrenzter Laderaum
- RL: Längsrichtung des Nutzfahrzeugs 1
- RQ: Querrichtung des Nutzfahrzeugs 1

## Patentansprüche

1. Nutzfahrzeug-Chassis, an dem mindestens eine Achse des Nutzfahrzeugs (1) gelagert ist und das mindestens einen Längsträger (10,11) und mindestens einen Hilfslangträger (28,29) umfasst, die sich jeweils in Längsrichtung (RL) des Nutzfahrzeugs (1) erstrecken, **dadurch gekennzeichnet, dass** das Nutzfahrzeug-Chassis mindestens einen quer zur Längsrichtung (RL) des Nutzfahrzeugs (1) ausgerichteten Querträger (15,16) umfasst, die mit dem Längsträger (10,11) fest verbunden sind und an denen der Hilfslangträger (28,29) abgestützt ist, wobei der Hilfslangträger (28,29) als zum Querträger (15,16) hin offenes Blechprofil geformt ist.

2. Nutzfahrzeug-Chassis nach Anspruch 1, **dadurch**
**gekennzeichnet, dass** der Hilfslangträger (28,29) auf dem Querträger (15,16) mittels eines in das Blechprofil greifenden Stützelements (37-40) in einer Position gehalten ist, in der zwischen dem Hilfslangträger (28,29) und dem Querträger (15,16) ein freier Abstand (A) besteht.

3. Nutzfahrzeug-Chassis nach einem der voranstehenden Ansprüche,
**dadurch gekennzeichnet, dass** das Stützelement (37-40) aus einem Kunststoff oder einem Holzwerkstoff geformt ist.

4. Nutzfahrzeug-Chassis nach einem der voranstehenden Ansprüche,
**dadurch gekennzeichnet, dass** der Hilfslangträger (28,29) einen sich über die Länge des Hilfslangträgers (28,29) erstreckenden Basisabschnitt (30) aufweist und **dass** an mindestens einer Längsseite des Basisabschnitts (30) ein in Richtung des Querträgers (15,16) weisender Schenkelabschnitt (31,32) angeschlossen ist, zwischen dessen dem Querträger (15,16) zugeordneter Endkante und der Oberseite (27) des Querträgers (15,16) der freie Abstand (A) besteht.

5. Nutzfahrzeug-Chassis nach Anspruch 4, **dadurch**
**gekennzeichnet, dass** der Hilfslangträger (28,29) nach Art eines U-Profils geformt ist, bei dem an jede Längsseite des Basisabschnitts (30) jeweils ein Schenkelabschnitt (31,32) angeschlossen ist, zwischen dessen dem Querträger (15,16) zugewandten Endkante und der Oberseite des Querträgers (15,16) jeweils der freie Abstand (A) besteht.

6. Nutzfahrzeug-Chassis nach Anspruch 2 oder 3 und einem der Ansprüche 4 oder 5, **dadurch gekennzeichnet, dass** der Hilfslangträger (28,29) mit seinem Basisabschnitt (30) auf dem Stützelement (37-40) aufliegt und ausschließlich über den Basisabschnitt (30) auf dem jeweiligen Querträger (15,16) abgestützt ist.

7. Nutzfahrzeug-Chassis nach einem der voranstehenden Ansprüche,
**dadurch gekennzeichnet, dass** das Blech, aus dem der Hilfslangträger (28,29) geformt ist, eine Blechdicke von 1 - 6 mm aufweist.

8. Nutzfahrzeug-Chassis nach einem der voranstehenden Ansprüche,
**dadurch gekennzeichnet, dass** die Oberseite (41) des Hilfslangträgers (28,29) und die Oberseite (12) des Längsträgers (10,11) in einer gemeinsamen Ebene liegen und **dass** auf den Oberseiten (41,12) von Hilfslangträger (28,29) und Längsträger (10,11) ein Ladeboden (14) mit ihrer Unterseite aufliegt, an deren Oberseite eine Ladefläche für ein zu transportierendes Gut vorgesehen ist.

9. Nutzfahrzeug-Chassis nach einem der voranstehenden Ansprüche,
**dadurch gekennzeichnet, dass** es mindestens zwei Längsträger (10,11) umfasst, die durch die Querträger (15,16) in einem Abstand gehalten sind und **dass** der mindestens eine Hilfslangträger (28,29) in dem von den Längsträgern (10,11) an seinen Längsseiten begrenzten Zwischenraum angeordnet ist.

10. Nutzfahrzeug-Chassis nach Anspruch 9, **dadurch gekennzeichnet, dass** sich der wenigstens eine Querträger (15,16) von einem zentralen Abschnitt (21), der zwischen den Längsträgern (10,11) angeordnet ist, durch einen in den Längsträger (10,11) eingeformten Ausschnitt (17,18) bis zu einem Seitenabschnitt (19,20) erstrecken, der seitlich nach außen über einen der Längsträger (10,11) hinaussteht.

11. Nutzfahrzeug nach Anspruch 10, **dadurch gekennzeichnet, dass** in Gebrauchsstellung der zentrale Abschnitt (21) des Querträgers (15,16) gegenüber dem Seitenabschnitt (19,20) des Querträgers (15,16) abgesenkt ist, so dass zwischen der Oberseite (27) des zentralen Abschnitts (21) und einer gedachten, durch die Oberseite der Längsträger (10,11) aufgespannten Ebene ein Freiraum vorhanden ist, in dem der mindestens eine Hilfslangträger (28,29) angeordnet ist.

12. Nutzfahrzeug nach Anspruch 11, **dadurch gekennzeichnet,** d a s s die Oberseite des Hilfslangträgers (28,29) in der gedachten, durch die Oberseite (12) der Längsträger (10,11) aufgespannten Ebene liegt.

## Claims

1. Commercial vehicle chassis on which at least one axle of the commercial vehicle (1) is mounted and which comprises at least one longitudinal member (10, 11) and at least one auxiliary longitudinal member (28, 29), each of which extends in the longitudinal direction (RL) of the commercial vehicle (1), **characterised in that** the commercial vehicle chassis comprises at least one transverse member (15, 16) aligned transversely to the longitudinal direction (RL) of the commercial vehicle (1), which are firmly connected to the longitudinal member (10, 11) and on which the auxiliary longitudinal member (28, 29) is supported, wherein the auxiliary longitudinal member (28, 29) is formed as a sheet metal profile open towards the transverse member (15, 16).

2. Commercial vehicle chassis according to claim 1, **characterised in that** the auxiliary longitudinal member (28, 29) is held on the transverse member (15, 16) by means of a support element (37-40) engaging into the sheet metal profile in a position in which there is a free distance (A) between the auxiliary longitudinal member (28, 29) and the transverse member (15, 16).

3. Commercial vehicle chassis according to any one of the preceding claims, **characterised in that** the support element (37-40) is formed from a plastic or a wood material.

4. Commercial vehicle chassis according to any one of the preceding claims, **characterised in that** the auxiliary longitudinal member (28, 29) has a base section (30) extending over the length of the auxiliary longitudinal member (28, 29) and **in that** a leg section (31, 32) pointing in the direction of the transverse member (15, 16) is connected to at least one longitudinal side of the base section (30), between the end edge (A) of the leg section assigned to the transverse member (15, 16) and the upper side (27) of the transverse member (15, 16) there is the free distance (A).

5. Commercial vehicle chassis according to claim 4, **characterised in that** the auxiliary longitudinal member (28, 29) is formed in the manner of a U-profile in which a leg section (31, 32) is connected to each longitudinal side of the base section (30), between the end edge of the leg section assigned to the transverse member (15, 16) and the upper side of the transverse member (15, 16) in each case there is the free distance (A).

6. Commercial vehicle chassis according to claim 2 or 3 and any one of claims 4 or 5, **characterised in that** the auxiliary longitudinal member (28, 29) rests with its base section (30) on the support element (37-40) and is supported exclusively via the base section (30) on the respective transverse member (15, 16).

7. Commercial vehicle chassis according to any one of the preceding claims, **characterised in that** the sheet metal from which the auxiliary longitudinal member (28, 29) is formed has a sheet metal thickness of 1 - 6 mm.

8. Commercial vehicle chassis according to any one of the preceding claims, **characterised in that** the upper side (41) of the auxiliary longitudinal member (28, 29) and the upper side (12) of the longitudinal member (10, 11) lie in a common plane and **in that** on the upper sides (41, 12) of auxiliary longitudinal member (28, 29) and longitudinal member (10, 11) rests a loading floor (14) with its underside, on whose upper side is provided a loading surface for goods to be transported.

9. Commercial vehicle chassis according to any one of the preceding claims, **characterised in that** it comprises at least two longitudinal members (10, 11) which are held at a distance by the transverse members (15, 16) and **in that** the at least one auxiliary longitudinal member (28, 29) is arranged in the intermediate space delimited by the longitudinal members (10, 11) on its longitudinal sides.

10. Commercial vehicle chassis according to claim 9, **characterised in that** the at least one transverse member (15, 16) extends from a central section (21) arranged between the longitudinal members (10, 11) through a cut-out (17, 18) formed into the longitudinal member (10, 11) to a side section (19, 20) which projects laterally outwards over one of the longitudinal members (10, 11).

11. Commercial vehicle according to claim 10, **characterised in that**, in the position of use, the central section (21) of the transverse member is lowered with respect to the side section (19, 20) of the transverse member (15, 16), so that between the upper side (27) of the central section (21) and an imaginary plane spanned by the upper side of the longitudinal members (10, 11), there is a free space in which the at least one auxiliary longitudinal member (28, 29) is arranged.

12. Commercial vehicle according to claim 11, **characterised in that** the upper side of the auxiliary longitudinal member (28, 29) lies in the imaginary plane spanned by the upper side (12) of the longitudinal members (10, 11).

## Revendications

1. Châssis de véhicule utilitaire, sur lequel est logé au moins un essieu de véhicule utilitaire (1) et qui comporte au moins un longeron (10, 11) et au moins un longeron auxiliaire (28, 29) qui s'étendent chacun dans la direction longitudinale (RL) du véhicule utilitaire (1), **caractérisé en ce que** le châssis de véhicule utilitaire comporte au moins une traverse (15, 16) orientée transversalement par rapport à la direction longitudinale (RL) du véhicule utilitaire (1), lesquelles sont fermement reliées au longeron (10, 11) et sur lesquelles s'appuie le longeron auxiliaire (28, 29), le longeron auxiliaire (28, 29) étant formé en tant que profilé en tôle ouvert vers la traverse (15, 16).

2. Châssis de véhicule utilitaire selon la revendication 1, **caractérisé en ce que** le longeron auxiliaire (28, 29) est maintenu sur la traverse (15, 16), à l'aide d'un élément d'appui (37-40) s'engageant dans le profil en tôle, dans une position au niveau de laquelle il existe une distance libre (A) entre le longeron auxiliaire (28, 29) et la traverse (15, 16).

3. Châssis de véhicule utilitaire selon l'une des revendications précédentes, **caractérisé en ce que** l'élément d'appui (37-40) est formé en un matériau plastique ou en un matériau en bois.

4. Châssis de véhicule utilitaire selon l'une des revendications précédentes, **caractérisé en ce que** le longeron auxiliaire (28, 29) présente une section de base (30) s'étendant sur la longueur du longeron auxiliaire (28, 29) et **en ce qu'**une section de branche (31, 32) orientée en direction de la traverse (15, 16) est raccordée sur au moins un côté longitudinal de la section de base (30), dont entre son bord d'extrémité associé à la traverse (15, 16) et la partie supérieure (27) de la traverse (15, 16) se trouve la distance libre (A).

5. Châssis de véhicule utilitaire selon la revendication 4, **caractérisé en ce que** le longeron auxiliaire (28, 29) est formé à la manière d'un profilé en U, dans lequel respectivement une section de branche (31, 32) est raccordée de chaque côté longitudinal de la section de base (30), dont entre son bord d'extrémité associé à la traverse (15, 16) et la partie supérieure de la traverse (15, 16) se trouve respectivement la distance libre (A).

6. Châssis de véhicule utilitaire selon la revendication 2 ou 3 et l'une des revendications 4 ou 5, **caractérisé en ce que** le longeron auxiliaire (28, 29) avec sa section de base (30) repose sur l'élément d'appui (37-40) et est soutenu exclusivement par la section de base (30) sur la traverse correspondante (15, 16).

7. Châssis de véhicule utilitaire selon l'une des revendications précédentes, **caractérisé en ce que** la tôle à partir de laquelle le longeron auxiliaire (28,29) est formé présente une épaisseur de tôle de 1 - 6 mm.

8. Châssis de véhicule utilitaire selon l'une des revendications précédentes, **caractérisé en ce que** la partie supérieure (41) du longeron auxiliaire (28, 29) et la partie supérieure (12) du longeron (10, 11) se trouvent dans un plan commun et **en ce que** sur les parties supérieures (41, 12) du longeron auxiliaire (28, 29) et du longeron (10, 11) repose un plancher de chargement (14) avec sa partie inférieure, sur la partie supérieure duquel l'on prévoit une surface de chargement pour un bien à transporter.

9. Châssis de véhicule utilitaire selon l'une des revendications précédentes, **caractérisé en ce qu'**il comporte au moins deux longerons (10, 11) qui sont maintenus à une distance par les traverses (15, 16) et **en ce qu'**au moins un longeron auxiliaire (28, 29) est agencé dans l'espace intermédiaire limité par les longerons (10, 11) sur ses côtés longitudinaux.

10. Châssis de véhicule utilitaire selon la revendication 9, **caractérisé en ce que** ladite au moins une traverse (15, 16) s'étend d'une section centrale (21), laquelle est agencée entre les longerons (10, 11), à travers une découpe (17, 18) moulée dans les longerons (10, 11), jusqu'à une section latérale (19, 20) qui fait saillie latéralement vers l'extérieur au-delà d'un des longerons (10, 11).

11. Véhicule utilitaire selon la revendication 10, **caractérisé en ce que**, en position d'utilisation, la section centrale (21) de la traverse (15, 16) est abaissée par rapport à la section latérale (19, 20) de la traverse (15, 16), de sorte qu'il existe entre la face supérieure (27) de la section centrale (21) et un plan imaginaire, défini par la partie supérieure des longerons (10, 11), un espace libre dans lequel est agencé au moins un longeron auxiliaire (28, 29).

12. Véhicule utilitaire selon la revendication 11, **caractérisé en ce que** la partie supérieure du longeron auxiliaire (28, 29) se trouve dans le plan imaginaire, défini par la face supérieure (12) des longerons (10, 11).
